# EUROPEAN PATENT SPECIFICATION

(11) **EP 4 376 291 B1**
(45) Date of publication and mention of the grant of the patent: **28.10.2026**
(21) Application number: 23212393.5
(22) Date of filing: 27.11.2023
(51) Int. Cl.: H02P 29/024, H02P 29/028

(54) **FAULT-TOLERANT CONTROL METHOD FOR OPEN-CIRCUIT FAULT IN ALTERNATING CURRENT MOTOR, FAULT-TOLERANT CONTROL APPARATUS AND COMPUTER STORAGE MEDIUM**
FEHLERTOLERANTES REGELVERFAHREN FÜR EINEN LEERLAUFFEHLER IN EINEM WECHSELSTROMMOTOR, FEHLERTOLERANTE REGELVORRICHTUNG UND COMPUTERSPEICHERMEDIUM
PROCÉDÉ DE COMMANDE TOLÉRANTS AUX DÉFAUTS POUR UNE DÉFAILLANCE DE CIRCUIT OUVERT DANS UN MOTEUR À COURANT ALTERNATIF, DISPOSITIF DE COMMANDE TOLÉRANTS AUX DÉFAUTS ET SUPPORT DE STOCKAGE INFORMATIQUE

(30) Priority: 28.11.2022 CN 202211500663
(43) Date of publication of application: 29.05.2024
(73) Proprietor: XPT EDS (Hefei) Co., Ltd., Hefei City, Anhui 230601 (CN)
(72) Inventor: XIA, Zekun, Hefei City 230601 (CN); WANG, Kai, Hefei City 230601 (CN)
(74) Representative: v. Bezold & Partner Patentanwälte - PartG mbB

(56) References cited:
- CN-A- 115 347 849

## Description

### TECHNICAL FIELD

The disclosure relates to the field of motor control, and more specifically, to a fault-tolerant control method and apparatus for an open-circuit fault in an alternating current motor and an inverter thereof, a computer device, and a computer storage medium.

### BACKGROUND

For an electric vehicle with a front motor drive and a rear motor drive, when one motor drive system fails, the electric vehicle can still maintain normal operation by means of the other motor drive system. However, this method is not applicable to a single-motor-drive vehicle. To ensure long-term stable operation of the single-motor-drive vehicle in the event of a fault, the motor drive system needs to have a good fault-tolerant capability. Currently, a common strategy for dealing with an open-circuit fault in an alternating current motor and an inverter thereof is to add an auxiliary circuit to implement fault-tolerant control. However, this strategy will increase system costs and complexity, and cannot be directly applied to existing alternating current motor drive system products.

Currently, there are fewer pure software fault-tolerant control strategies for dealing with the open-circuit fault in the alternating current motor and the inverter thereof without changing a hardware circuit structure of the motor and the inverter. In addition, existing pure software fault-tolerant control strategies for a three-phase alternating current motor drive system are directed only to the case of an open-circuit fault occurring in a certain phase. In practice, the open-circuit fault may not occur only in the same phase of the motor drive system, but it may also occur in multi phases. In addition, the existing fault-tolerant control strategies for an open-circuit fault occurring in a certain phase are not applicable to the case of the open-circuit fault occurring in multiple phases of the three-phase alternating current motor drive system, resulting in a narrow range of faults to which the existing strategies are actually applicable, and a low level of reliability and safety.

Document CN 115 347 849 A ( D1 ) provides a fault-tolerant control method for an open-circuit fault of an AC motor, said AC motor being driven by an inverter, said method comprising the steps of: A, constructing a fault-tolerant control optimisation model under the condition of considering that the motor alternating and straight axis currents vary with the motor rotor electrical angle, wherein said fault-tolerant control optimisation model comprises a cost generated based on a motor torque equation equation and a limiting condition comprising one or more of a fault phase current equation, a motor phase current limiting equation, and a motor phase voltage limiting equation; and B. determining a reference value of the phase current at the current motor rotor electrical angle using said fault-tolerant control optimisation model.

### SUMMARY

In order to solve or at least alleviate one or more of the aforementioned problems, the disclosure proposes a fault-tolerant control method and apparatus for an open-circuit fault in an alternating current motor and an inverter thereof, a computer device, and a computer storage medium. The method can be applied to the case of an open-circuit fault occurring in 1 to M phases (e.g., an open-circuit fault occurring in phase 1, ..., an open-circuit fault occurring in phase M-1, and an open-circuit fault occurring in phase M) of an M-phase alternating current motor (M being an integer greater than or equal to 3) and an inverter thereof, which method fills the technical gap of a pure software fault-tolerant control solution for a multi-phase open-circuit fault, particularly for a multi-phase open-circuit fault in a three-phase alternating current motor drive system.

According to a first aspect of the disclosure, a fault-tolerant control method for an open-circuit fault in an alternating current motor and an inverter thereof is provided. The subject-matter of the present invention is defined by the features of independent claim(s). Further preferred embodiments of the present invention are defined by the dependent claims. The method includes the following steps: A: determining, based on fault information of the alternating current motor and the inverter for driving the alternating current motor, an open-circuit fault position interval corresponding to each fault phase in one or more fault phases, the open-circuit fault position interval refers to a rotor electrical angle range within which the fault phase in the corresponding fault state cannot operate normally; B: establishing a fault-tolerant control constraint model, where the fault-tolerant control constraint model includes an open-circuit fault equation applicable to each fault phase for the corresponding open-circuit fault position interval; and C: determining, with the fault-tolerant control constraint model as a constraint, a phase current reference value by using a fault-tolerant control algorithm; and
the step of determining an open-circuit fault position interval corresponding to each fault phase in one or more fault phases, comprises:
determining a corresponding fault state for each of said fault phases based on at least one of the following fault information: whether various phase windings of the alternating current motor are able to be connected to a positive pole and a negative pole of a power supply through the inverter; the positions of power devices in the inverter in which the open-circuit fault occurs; the positions of phase windings of the alternating current motor in which the open-circuit fault occurs;
determining an open-circuit fault position interval corresponding to the fault state.

As an alternative or addition to the above solution, in the method according to an embodiment of the disclosure, the step of determining a corresponding fault state for each of said fault phases based on whether various phase windings of the alternating current motor are able to be connected to a positive pole and a negative pole of a power supply through the inverter, comprises: if the fault information indicates that a winding in a fault phase is unable to be connected to the positive pole or the negative pole of the power supply when a current of the fault phase should be positive, and that the winding in the fault phase is able to be connected to the positive pole and the negative pole of the power supply when the current of the fault phase should be negative, it is determined that the fault phase is in the first fault state; if the fault information indicates that the winding in the fault phase is unable to be connected to the positive pole or the negative pole of the power supply when the current of the fault phase should be negative, and that the winding in the fault phase is able to be connected to the positive pole and the negative pole of the power supply when the current of the fault phase should be positive, it is determined that the fault phase is in the second fault state; and if the fault information indicates that the winding in the fault phase is unable to be connected to the positive pole and the negative pole of the power supply throughout an electrical cycle, it is determined that the fault phase is in the third fault state.

As an alternative or addition to the above solution, in the method according to an embodiment of the disclosure, the step of determining the corresponding fault state for each fault phase based on positions of power devices in the inverter in which the open-circuit fault occurs, comprises: if the fault information indicates that a power device in the inverter in which the open-circuit fault occurs is one or more of an upper bridge arm switching tube and a lower bridge arm diode in a fault phase, it is determined that the fault phase is in the first fault state; if the fault information indicates that a power device in the inverter in which the open-circuit fault occurs is one or more of a lower bridge arm switching tube and an upper bridge arm diode in the fault phase, it is determined that the fault phase is in the second fault state; and if the fault information indicates that the power devices in the inverter in which the open-circuit fault occurs satisfy one of the following conditions, it is determined that the fault phase is in the third fault state: the open-circuit fault occurring in both the upper bridge arm switching tube and the lower bridge arm switching tube in the fault phase; the open-circuit fault occurring in both the upper bridge arm diode and the lower bridge arm diode in the fault phase; the open-circuit fault occurring in both the upper bridge arm switching tube and the upper bridge arm diode in the fault phase; the open-circuit fault occurring in both the lower bridge arm switching tube and the lower bridge arm diode in the fault phase; and a total number of switching tubes and diodes with the open-circuit fault in the fault phase being more than two.

As an alternative or addition to the above solution, in the method according to an embodiment of the disclosure, the step of determining an open-circuit fault position interval corresponding to the fault state, comprises: determining the open-circuit fault position interval corresponding to the first fault state as [π + Δθx, 2π + Δθx], determining the open-circuit fault position interval corresponding to the second fault state as [0 + Δθx, π + Δθx], and determining the open-circuit fault position interval corresponding to the third fault state as [0, 2π], where $Δ {θ}_{x} = \frac{2 π}{M} \left(x-1\right)$ where M denotes a number of phases of the alternating current motor, x denotes a phase sequence of the fault phase, and x ≤ M.

As an alternative or addition to the above solution, in the method according to an embodiment of the disclosure, in step B, the open-circuit fault equation for an xth phase can be expressed as:
Fx(θ - Δθx) = 0, θ ∈ an open-circuit fault position interval corresponding a fault state for the xth phase,where Fx denotes a fault phase current equation, and θ denotes electrical angle of a motor rotor.

As an alternative or addition to the above solution, in the method according to an embodiment of the disclosure, the step of determining, with the fault-tolerant control constraint model as a constraint, a phase current reference value by using a fault-tolerant control algorithm, comprises : constructing a fault-tolerant control optimization model, where the fault-tolerant control optimization model includes a cost equation generated based on a motor torque equation, and constraints composed of one or more of the fault-tolerant control constraint model, a motor phase current limit equation, and a motor phase voltage limit equation; and determining the phase current reference value by using the fault-tolerant control optimization model, where the phase current reference value is a function of the motor rotor electrical angle.
As an alternative or addition to the above solution, in the method according to an embodiment of the disclosure, if the alternating current motor is a permanent magnet synchronous motor and the inverter is a three-phase full bridge inverter, the cost equation is: $J = {\left({T}_{ref}-\frac{3}{2}{N}_{p}{i}_{q}\left[{λ}_{m}+{i}_{d}\left({L}_{d}-{L}_{q}\right)\right]\right)}^{2}$ where Tref denotes a torque reference value, Np denotes a number of pole pairs of the motor, id denotes a direct-axis current, iq denotes a quadrature-axis current, λm denotes a flux linkage of a permanent magnet, Ld denotes a direct-axis inductance, and Lq denotes a quadrature-axis inductance.

According to a second aspect of the disclosure, a fault-tolerant control apparatus for an open-circuit fault in an alternating current motor and an inverter thereof is provided. The fault-tolerant control apparatus includes: a fault determination module configured to determine, based on fault information of the alternating current motor and the inverter for driving the alternating current motor, a rotor fault position interval corresponding to each fault phase in one or more fault phases; a model establishment module configured to establish a fault-tolerant control constraint model, where the fault-tolerant control constraint model includes an open-circuit fault equation applicable to each fault phase for the corresponding rotor fault position interval; and a current determination module configured to determine, with the fault-tolerant control constraint model as a constraint, a phase current reference value by using a fault-tolerant control algorithm.

According to a third aspect of the disclosure, there is provided a computer device, which includes: a memory; a processor; and a computer program stored on the memory and executable on the processor, where the computer program is executed to enable any of the methods according to the first aspect of the disclosure to be performed. According to a fourth aspect of the disclosure, there is provided a computer storage medium, which includes instructions, where when the instructions are run, any of the methods according to the first aspect of the disclosure is performed.

By establishing the fault-tolerant control constraint model including the open-circuit fault equations applicable to the fault phases for the corresponding rotor fault position intervals, the fault-tolerant control solution for an open-circuit fault in an alternating current motor and an inverter thereof according to the disclosure can be applicable to the case of the open-circuit fault occurring in any number of phases of the alternating current motor and the inverter thereof. In other words, the fault-tolerant control solution can be applicable to the case of the open-circuit fault occurring in 1 to M phases of the M-phase alternating current motor and the inverter thereof, which solution fills the technical gap in the art of a pure software general fault-tolerant control solution for a multi-phase open-circuit fault, particularly for a multi-phase open-circuit fault in the three-phase alternating current motor drive system. In addition, the fault-tolerant control solution can be directly applied to existing alternating current motor drive system products without changing any hardware circuit or structure of motor drive systems or increasing any additional device, thereby reducing the fault-tolerant control cost of the systems.

### BRIEF DESCRIPTION OF DRAWINGS

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:
FIG. 1 is a flowchart of a fault-tolerant control method 10 for an open-circuit fault in an alternating current motor according to one or more embodiments of the disclosure;
FIG. 2 is a diagram of a topological circuit of a three-phase full bridge inverter for driving a three-phase alternating current motor according to one or more embodiments of the disclosure;
FIG. 3 is a block diagram of a fault-tolerant control apparatus 30 for an open-circuit fault in an alternating current motor according to one or more embodiments of the disclosure; and
FIG. 4 is a block diagram of a computer device 40 according to one or more embodiments of the disclosure.

### DESCRIPTION OF EMBODIMENTS

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies can be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

Various exemplary embodiments according to the disclosure will be described below in detail with reference to the accompanying drawings.

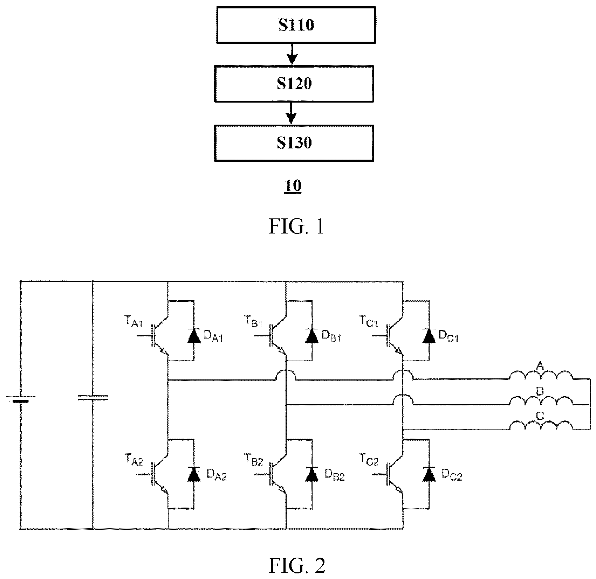

FIG. 1 is a flowchart of a fault-tolerant control method 10 for an open-circuit fault in an alternating current motor and an inverter thereof according to one or more embodiments of the disclosure. It is to be noted that the method 10 may be applicable to the case of an open-circuit fault occurring in phases 1 to M of an M-phase motor and an inverter thereof (for example, for a 3-phase motor and an inverter thereof, the method 10 may be applicable to the case of an open-circuit fault occurring in phases 1 to 3; and for another example, for a 6-phase motor and an inverter thereof, the method 10 may be applicable to the case of an open-circuit fault occurring in phases 1 to 6). In other words, the method 10 provides a general fault-tolerant control solution for either one-phase or multi-phase open-circuit fault in a multi-phase motor and an inverter thereof.

As shown in FIG. 1, in step S110, a rotor fault position interval corresponding to each fault phase in one or more fault phases is determined based on fault information of the alternating current motor and the inverter for driving the alternating current motor. Exemplarily, the above fault information may indicate whether there is an open-circuit fault in phase windings of the alternating current motor and/or in power devices (e.g., a switching tube and a diode) in the inverter for driving the alternating current motor. Exemplarily, the above fault information may also indicate whether the phase windings of the motor can be connected to a positive pole and/or a negative pole of a power supply through the inverter.

Exemplarily, the above alternating current motor may be a three-phase alternating current motor, such as a permanent magnet synchronous motor, an asynchronous motor, and a synchronous reluctance motor. Correspondingly, the above inverter may be a three-phase full bridge inverter commonly used in the field of motor control. The fault-tolerant control solution is explained in detail below using the three-phase alternating current motor and the three-phase full bridge inverter as an example. It is to be noted that the fault-tolerant control solution according to the disclosure can be applied to other types of alternating current motors (e.g., a five-phase alternating current motor) and other types of inverters based on the same or similar principles. The presented examples and implementations are considered to be illustrative rather than restrictive.

Optionally, in step S110, a corresponding fault state for each fault phase is first determined based on the fault information, where the fault state includes a first fault state, a second fault state, and a third fault state. Exemplarily, the fault state is associated with one or two of the following: a position of a phase winding in which the open-circuit fault occurs; a position of a power device in the inverter in which the open-circuit fault occurs; and a determination as to whether the phase windings of the motor can be connected to the positive pole and the negative pole of the power supply through the inverter.

One or more embodiments in which the corresponding fault state for each fault phase is determined based on the positions of the power devices in the inverter in which the open-circuit fault occurs is explained below. With the three-phase permanent magnet synchronous motor and the three-phase full bridge inverter as an example, if the fault information indicates that the power device in the inverter in which the open-circuit fault occurs is one or more of an upper bridge arm switching tube and a lower bridge arm diode in an xth phase (x denoting a phase sequence of the fault phase, and x is a positive integer and is less than or equal to a number of phases of the motor), it is determined that the xth phase is in the first fault state; if the fault information indicates that the power device in the inverter in which the open-circuit fault occurs is one or more of a lower bridge arm switching tube and an upper bridge arm diode in the xth phase, it is determined that the xth phase is in the second fault state; and if the fault information indicates that the power devices in the inverter in which the open-circuit fault occurs satisfy one of the following conditions, it is determined that the xth phase is in the third fault state: the open-circuit fault occurring in both the upper bridge arm switching tube and the lower bridge arm switching tube in the xth phase; the open-circuit fault occurring in both the upper bridge arm diode and the lower bridge arm diode in the xth phase; the open-circuit fault occurring in both the upper bridge arm switching tube and the upper bridge arm diode in the xth phase; the open-circuit fault occurring in both the lower bridge arm switching tube and the lower bridge arm diode in the xth phase; and a total number of switching tubes and diodes in the xth phase in which the open-circuit fault occurs being more than two. The steps of determining the fault state are described below in detail in conjunction with FIG. 2.

FIG. 2 is a diagram of a topological circuit of a three-phase full bridge inverter for driving a three-phase alternating current motor according to one or more embodiments of the disclosure. As shown in FIG. 2, the three-phase full bridge inverter includes three bridge arms. Each bridge arm may be divided into an upper bridge arm and a lower bridge arm, where each of the upper bridge arm and the lower bridge arm includes one switching tube and one diode. An A-phase winding of the three-phase motor is connected to switching tubes TA1 and TA2 and diodes DA1 and DA2, a B-phase winding of the three-phase motor is connected to switching tubes TB 1 and TB2 and diodes DB 1 and DB2, and a C-phase winding of the three-phase motor is connected to switching tubes TC1 and TC2 and diodes DC1 and DC2. As described above, if the device in which the open-circuit fault occurs is one or more of the A-phase upper bridge arm switching tube TA1 and the A-phase lower bridge arm diode DA2, it is determined that the A-phase is in the first fault state; if the fault information indicates that the device in which the open-circuit fault occurs is one or more of the A-phase lower bridge arm switching tube TA2 and the A-phase upper bridge arm diode DA1, it is determined that the A-phase is in the second fault state; and if the fault information indicates that power devices in which the open-circuit fault occurs satisfy one of the following conditions, it is determined that the A-phase is in the third fault state: the open-circuit fault occurring in both the switching tubes TA1 and TA2;the open-circuit fault occurring in both the diodes DA1 and DA2; the open-circuit fault occurring in both the switching tube TA1 and the diode DA1; the open-circuit fault occurring in both the switching tube TA2 and the diode DA2; and a total number of switching tubes TA1 and TA2 and diodes DA1 and DA2 with the open-circuit fault in the fault phase being more than two.

One or more embodiments in which the corresponding fault state for each fault phase is determined depending on whether the various phase windings of the alternating current motor can be connected to the positive pole and/or the negative pole of the power supply through the inverter. Also with the three-phase permanent magnet synchronous motor and the three-phase full bridge inverter as an example, in which a direction of a current flowing from the inverter into the motor winding is defined as positive, and a direction of a current flowing from the motor into the inverter is defined as negative, if the fault information indicates that when a current of the xth phase should be positive, a winding in the xth phase cannot be connected to the positive pole or the negative pole of the power supply, and that when the current of the xth phase should be negative, the winding in the xth phase can be connected to the positive pole and the negative pole of the power supply, it is determined that the xth phase is in the first fault state; if the fault information indicates that when the current of the xth phase should be negative, the winding in the xth phase cannot be connected to the positive pole or the negative pole of the power supply, and that when the current of the xth phase should be positive, the winding in the xth phase can be connected to the positive pole and the negative pole of the power supply, it is determined that the xth phase is in the second fault state; and if the fault information indicates that the winding in the xth phase cannot be connected to the positive pole and the negative pole of the power supply throughout an electrical cycle, it is determined that the xth phase is in the third fault state.

With continued reference to FIG. 2, if the A-phase winding cannot be connected to the positive pole or the negative pole of the power supply when the A-phase current is positive (iA > 0), and if the A-phase winding can be connected to the positive pole and the negative pole of the power supply when the A-phase current is negative (iA < 0), it is determined that the A-phase is in the first fault state; if the A-phase winding cannot be connected to the positive pole or the negative pole of the power supply when the A-phase current is negative (iA < 0), and if the A-phase winding can be connected to the positive pole and the negative pole of the power supply when the A-phase current is positive (iA > 0), it is determined that the A-phase is in the second fault state; and if there is no rotor electrical angle in the A-phase throughout the electrical cycle, enabling the A-phase winding to be connected to the positive pole and the negative pole of the power supply, it is determined that the A-phase is in the third fault state.

Optionally, in step S110, after the corresponding fault state (e.g., the first fault state, the second fault state, and the third fault state) for each fault phase is determined, an open-circuit fault position interval corresponding to the fault state is determined. Exemplarily, the open-circuit fault position interval refers to a rotor electrical angle range within which the fault phase in the corresponding fault state cannot operate normally. Optionally, the open-circuit fault position interval corresponding to the first fault state is determined as [π + Δθx, 2π + Δθx], the open-circuit fault position interval corresponding to the second fault state is determined as [0 + Δθx, π + Δθx], and the open-circuit fault position interval corresponding to the third fault state is determined as [0, 2π], where $Δ {θ}_{x} = \frac{2 π}{M} \left(x-1\right)$ (Formula 1) where M denotes a number of phases of the alternating current motor, x denotes a phase sequence of the fault phase, and x ≤ M. It is to be noted that if the steps of determining the fault state in step S110 are omitted, the open-circuit fault position interval for the fault phase can be directly determined as [0, 2π], thereby simplifying the fault-tolerant control process.

It is to be understood that in the topological circuit of the three-phase full bridge inverter shown in FIG. 2, the alternating current motor has a number M of phases of 3, a phase sequence of the A-phase of 1, a phase sequence of a B-phase of 2, and a phase sequence of a C-phase of 3. In this example, if the A-phase winding cannot be connected to the positive pole or the negative pole of the power supply when the A-phase current is positive, , and if the A-phase winding can be connected to the positive pole and the negative pole of the power supply when the A-phase current is negative, the open-circuit fault position interval corresponding to the A-phase is [π, 2π]; if the A-phase winding cannot be connected to the positive pole or the negative pole of the power supply when the A-phase current is negative, , and if the A-phase winding can be connected to the positive pole and the negative pole of the power supply when the A-phase current is positive, the open-circuit fault position interval corresponding to the A-phase is [0, π]; and if there is no rotor electrical angle in the A-phase throughout the electrical cycle, enabling the A-phase winding to be connected to the positive pole and the negative pole of the power supply, the open-circuit fault position interval corresponding to the A-phase is [0, 2π]. More specifically, for the first phase (A-phase), the open-circuit fault position interval corresponding to the first fault state is [π, 2π]; the open-circuit fault position interval corresponding to the second fault state is [0, π]; and the open-circuit fault position interval corresponding to the third fault state is [0, 2π]. For the second phase (B-phase), the open-circuit fault position interval corresponding to the first fault state is [0, 2π/3] and [5π/3, 2π]; the open-circuit fault position interval corresponding to the second fault state is [2π/3, 5π/3]; and the open-circuit fault position interval corresponding to the third fault state is [0, 2π]. For the third phase (C-phase), the open-circuit fault position interval corresponding to the first fault state 1 is [π/3, 4π/3]; the open-circuit fault position interval corresponding to the second fault state is [0, π/3] and [4π/3, 2π]; and the open-circuit fault position interval corresponding to the third fault state is [0, 2π].

In step S120, a fault-tolerant control constraint model is established. The fault-tolerant control constraint model is composed of open-circuit fault equations for various fault phases, in which an open-circuit fault equation for each fault phase is applicable to its corresponding rotor fault position interval.

Exemplarily, the open-circuit fault equation may be an equation established according to a fault phase current of zero in a qd coordinate axis. Also with the three-phase permanent magnet synchronous motor and the three-phase full bridge inverter as an example, for the open-circuit fault of the first phase (A-phase), an A-phase open-circuit fault equation established in the qd coordinate axis according to the fault phase current of zero can be expressed as: ${i}_{d} cos \left(θ\right) - {i}_{q} sin \left(θ\right) = 0$ (Formula 2) where θ denotes electrical angle of a motor rotor. For the open-circuit fault of the second phase (B-phase), a B-phase open-circuit fault equation established in the qd coordinate axis according to the fault phase current of zero can be expressed as: ${i}_{d} cos \left(θ-\frac{2 π}{3}\right) - {i}_{q} sin \left(θ-\frac{2 π}{3}\right) = 0$ (Formula 3)

For the open-circuit fault of the third phase (C-phase), an open-circuit fault equation for this phase established in the qd coordinate axis according to the fault phase current of zero can be expressed as: ${i}_{d} cos \left(θ-\frac{4 π}{3}\right) - {i}_{q} sin \left(θ-\frac{4 π}{3}\right) = 0$ (Formula 4)

It is to be emphasized that the above open-circuit fault equations for various phases are applicable to the open-circuit fault position intervals corresponding to the fault states for various phases. The fault-tolerant control constraint model can be established in combination with the fault states for the phases and the open-circuit fault equations for the phases.

In an example, if the open-circuit fault occurs in all the three phases of the three-phase alternating current motor, and the first phase (A-phase) is in the first fault state, the second phase (B-phase) is in the second fault state, and the third phase (C-phase) is in the first fault state, the fault-tolerant control constraint model can be expressed as: $\left\{\begin{matrix}{i}_{d} cos \left(θ\right) - {i}_{q} sin \left(θ\right) = 0 , & θ ∈ \left[π,2π\right] \\ {i}_{d} cos \left(θ-\frac{2 π}{3}\right) - {i}_{q} sin \left(θ-\frac{2 π}{3}\right) = 0 , & θ ∈ \left[\frac{2 π}{3}, \frac{5 π}{3}\right] \\ {i}_{d} cos \left(θ-\frac{4 π}{3}\right) - {i}_{q} sin \left(θ-\frac{4 π}{3}\right) = 0 , & θ ∈ \left[\frac{π}{3}, \frac{4 π}{3}\right]\end{matrix}\right.$ (Formula 5)

In another example, if the open-circuit fault occurs in only two phases of the three-phase alternating current motor, and the first phase (A-phase) is in the second fault state, the second phase (B-phase) is in the first fault state, and the third phase (C-phase) has no fault, the fault-tolerant control constraint model can be expressed as: $\left\{\begin{matrix}{i}_{d} cos \left(θ\right) - {i}_{q} sin \left(θ\right) = 0 , & θ ∈ \left[0, π\right] \\ {i}_{d} cos \left(θ-\frac{2 π}{3}\right) - {i}_{q} sin \left(θ-\frac{2 π}{3}\right) = 0 , & θ ∈ \left[0, \frac{2 π}{3}\right] , \left[\frac{5 π}{3},2π\right]\end{matrix}\right.$ (Formula 6)

In still another example, if the open-circuit fault occurs in only one phase of the three-phase alternating current motor, and the first phase (A-phase) has no fault, the second phase (B-phase) has no fault, and the third phase (C-phase) is in the first fault state, the fault-tolerant control constraint model can be expressed as: $\left\{{i}_{d}cos\left(θ-\frac{4 π}{3}\right)-{i}_{q}sin\left(θ-\frac{4 π}{3}\right)=0, θ∈\left[\frac{π}{3}, \frac{4 π}{3}\right]\right.$ (Formula 7)

The above fault-tolerant control constraint model can be simplified. For example, for the three-phase alternating current motor without a neutral wire led out, a sum of phase currents of the three phases is zero, and if currents of two phases are both zero within a certain rotor electrical angle range, the current of the third phase is also zero, and therefore, the fault-tolerant control constraint model can be simplified according to the principle.

The method for constructing the fault-tolerant control constraint model illustrated in the above example may be extended to an M-phase alternating current motor and an inverter thereof. It is to be understood that for the M-phase motor and the inverter thereof, the open-circuit fault may have a number of phases of 1 to M, and correspondingly, the fault-tolerant control constraint model is composed of 1 to M equations. Specifically, for the M-phase alternating current motor, if the open-circuit fault occurs in the xth phase (x denoting the phase sequence of the fault phase, and is a positive integer and is less than or equal to M), optionally, the open-circuit fault equation for the xth phase can be expressed as: $\begin{matrix}Fx \left(θ-Δθx\right) = 0 , θ ∈ an open - circuit fault position interval corresponding to a fault \\ state for the xth phase\end{matrix}$ (Formula 8) where Fx denotes a fault phase current equation, and θ denotes a motor rotor electrical angle, the open-circuit fault position interval corresponding to the first fault state is [π + Δθx, 2π + Δθx], the open-circuit fault position interval corresponding to the second fault state is [0 + Δθx, π + Δθx], and the open-circuit fault position interval corresponding to the third fault state is [0, 2π]. If the open-circuit fault occurs in phases k1, k2, ..., kN (N ≤ M), and fault states corresponding to these open-circuit fault phases are respectively s1, s2, ..., sN (s1, s2, ..., sN respectively correspond to one of the first fault state, the second fault state, and the third fault state), the fault-tolerant control constraint model for the M-phase alternating current motor can be expressed as: $\left\{\begin{matrix}{F}_{{k}_{1}} \left(θ-Δ{θ}_{{k}_{1}}\right) = 0 , & θ ∈ {s}_{1} & \begin{matrix}corresponding fault \\ position interval\end{matrix} \\ {F}_{{k}_{2}} \left(θ-Δ{θ}_{{k}_{2}}\right) = 0 , & θ ∈ {s}_{2} & \begin{matrix}corresponding fault \\ position interval\end{matrix} \\ ⋮ & & ⋮ \\ {F}_{{k}_{N}} \left(θ-Δ{θ}_{{k}_{N}}\right) = 0 , & θ ∈ {s}_{N} & \begin{matrix}corresponding fault \\ position interval\end{matrix}\end{matrix}\right.$ (Formula 9)

In step S 130, with the fault-tolerant control constraint model as a constraint, a phase current reference value is determined by using a fault-tolerant control algorithm.When the open-circuit fault occurs and torque control of the motor based on field-oriented control (FOC) is still selected, it is necessary to obtain a direct-axis current reference value and a quadrature-axis current reference value of the alternating current motor under fault. If a torque reference value of the motor is given as Tref, and an output torque of the motor is required to be as close as possible to Tref under fault, for the three-phase permanent magnet synchronous motor, a torque equation below needs to be satisfied: ${T}_{ref} - {T}_{eq} = 0$ (Formula 10) where Tref denotes the torque reference value, and Teq denotes the torque equation of the alternating current motor. A fault-tolerant control optimization model can be established by combining the above torque equation and the fault-tolerant control constraint model constructed in step S120, where the fault-tolerant control optimization model includes a cost equation generated based on the motor torque equation, and constraints composed of one or more of the fault-tolerant control constraint model, a motor phase current limit equation, and a motor phase voltage limit equation. Specifically, the cost equation of the fault-tolerant control optimization model may be established based on the motor torque equation and the torque reference value: $J = {\left({T}_{ref}-{T}_{eq}\right)}^{2}$ (Formula 11)

The constraints of the fault-tolerant control optimization model can be expressed as: $\left\{\begin{matrix}{F}_{{k}_{1}} \left(θ-{Δθ}_{{k}_{1}}\right) = 0 , & θ ∈ {s}_{1} corresponding fault position interval \\ {F}_{{k}_{2}} \left(θ-{Δθ}_{{k}_{2}}\right) = 0 , & θ ∈ {s}_{2} corresponding fault position interval \\ ⋮ & ⋮ \\ {F}_{{k}_{N}} \left(θ-{Δθ}_{{k}_{N}}\right) = 0 , & θ ∈ {s}_{N} corresponding fault position interval \\ \sqrt{{i}_{d}^{2} + {i}_{q}^{2}} \leq {i}_{max} , & θ ∈ \left[0,2π\right] \\ \sqrt{{v}_{d}^{2} + {v}_{q}^{2}} \leq {v}_{max} , & θ ∈ \left[0,2π\right]\end{matrix}\right.$ (Formula 12) where vd and vq denote a direct-axis voltage and a quadrature-axis voltage of the alternating current motor, id and iq denote a direct-axis current and a quadrature-axis current of the alternating current motor, and imax and vmax denote a maximum phase current and a maximum phase voltage of the alternating current motor. In other examples, the constraints of the fault-tolerant control optimization model may be composed only of the fault-tolerant control constraint model constructed in step S 120. Also with the three-phase permanent magnet synchronous motor and the three-phase full bridge inverter as an example, based on the motor torque equation and the torque reference value of the three-phase permanent magnet synchronous motor, the cost equation can be expressed as: $J = {\left({T}_{ref}-\frac{3}{2}{N}_{p}{i}_{q}\left[{λ}_{m}+{i}_{d}\left({L}_{d}-{L}_{q}\right)\right]\right)}^{2}$ (Formula 13) where Tref denotes a torque reference value, Np denotes a number of pole pairs of the motor, id denotes a direct-axis current, iq denotes a quadrature-axis current, λm denotes a flux linkage of a permanent magnet, Ld denotes a direct-axis inductance, and Lq denotes a quadrature-axis inductance. If the open-circuit fault occurs in all the three phases of the three-phase permanent magnet synchronous motor, and the first phase (A-phase) is in the third fault state, the second phase (B-phase) is in the first fault state, and the third phase (C-phase) is in the second fault state, the constraints of the fault-tolerant control optimization model in this case can be expressed as: $\left\{\begin{matrix}{i}_{d} cos \left(θ\right) - {i}_{q} sin \left(θ\right) = 0 , & θ ∈ \left[0,2π\right] \\ {i}_{d} cos \left(θ-\frac{2 π}{3}\right) - {i}_{q} sin \left(θ-\frac{2 π}{3}\right) = 0 , & θ ∈ \left[0, \frac{2 π}{3}\right] , \left[\frac{5 π}{3},2π\right] \\ {i}_{d} cos \left(θ-\frac{4 π}{3}\right) - {i}_{q} sin \left(θ-\frac{4 π}{3}\right) = 0 , & θ ∈ \left[0, \frac{π}{3}\right] , \left[\frac{4 π}{3},2π\right] \\ \sqrt{{i}_{d}^{2} + {i}_{q}^{2}} \leq {i}_{max} , & θ ∈ \left[0,2π\right] \\ \sqrt{{v}_{d}^{2} + {v}_{q}^{2}} \leq {v}_{max} & θ ∈ \left[0,2π\right]\end{matrix}\right.$ (Formula 14)

The phase current reference value of the alternating current motor under fault can be obtained by solving the fault-tolerant control optimization model. It is to be noted that due to the introduction of the fault-tolerant control constraint model into the disclosure, the obtained direct-axis current reference value and quadrature-axis current reference value are both functions of the motor rotor electrical angle.

The method 10 according to one or more embodiments of the disclosure can be applicable to the case of the open-circuit fault occurring in any number of phases of the alternating current motor and the inverter thereof. In other words, the method can be applicable to the case of the open-circuit fault occurring in 1 to M phases of the M-phase alternating current motor and the inverter thereof, which method fills the technical gap in the art of a pure software general fault-tolerant control solution for a multi-phase open-circuit fault, particularly for a multi-phase open-circuit fault in a three-phase alternating current motor drive system. In addition, the method 10 according to one or more embodiments of the disclosure can be directly applied to existing alternating current motor drive system products without changing any hardware circuit or structure of motor drive systems or increasing any additional device, thereby reducing the fault-tolerant control cost of the systems.

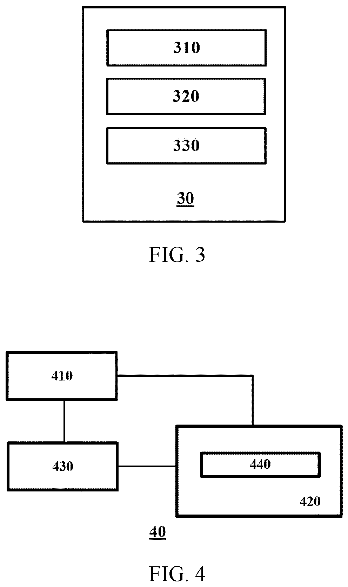

FIG. 3 is a block diagram of a fault-tolerant control apparatus 30 for an open-circuit fault in an alternating current motor and an inverter thereof according to one or more embodiments of the disclosure. It is to be noted that the fault-tolerant control apparatus 30 is applicable to the case of the open-circuit fault occurring in 1 to M phases of the M-phase motor and the inverter thereof. In other words, the fault-tolerant control apparatus 30 can perform fault-tolerant control for either one-phase or multi-phase open-circuit fault in a multi-phase motor and an inverter thereof. As shown in FIG. 3, the fault-tolerant control apparatus 30 includes a fault determination module 310, a model establishment module 320, and a current determination module 330.

The fault determination module 310 is configured to determine, based on fault information of the alternating current motor and the inverter for driving the alternating current motor, a rotor fault position interval corresponding to one or more fault phases. For the process of determining the rotor fault position interval, reference may be made to the above description of step S110, which is not repeated herein.
The model establishment module 320 is configured to establish a fault-tolerant control constraint model, where the fault-tolerant control constraint model includes an open-circuit fault equation applicable to one or more fault phases for the corresponding rotor fault position interval. For the process of establishing the fault-tolerant control constraint model, reference may be made to the above description of step S120, which is not repeated herein.

The current determination module 330 is configured to determine, with the fault-tolerant control constraint model as a constraint, a phase current reference value by using a fault-tolerant control algorithm. For the process of determining the phase current reference value, reference may be made to the above description of step S130, which is not repeated herein.

Then, referring to FIG. 4, FIG. 4 is a block diagram of a computer device 40 according to one or more embodiments of the disclosure.

As shown in FIG. 4, the computer device 40 includes a communication unit 410, a memory 420, a processor 430, and a computer program 440 stored on the memory 420 and executable on the processor 430.

The communication unit 410, as a communication interface, is configured to establish a communication connection between the computer device and an external device (e.g., a current controller and a motor sensor) or a network.

The memory 420 stores the computer program 440 executable by the processor 430. The processor 330 is configured to execute the computer program 440 to implement the method shown in FIG. 1.

According to a fourth aspect of the disclosure, there is further provided a computer-readable storage medium having a computer program stored thereon, where when the program is executed by a processor, the method 10 shown in FIG. 1 is implemented. The computer-readable storage medium may include a random access memory (RAM) such as a synchronous dynamic random access memory (SDRAM), a read-only memory (ROM), a non-volatile random access memory (NVRAM), an electrically erasable programmable read-only memory (EEPROM), a flash memory, or another known storage medium.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into substeps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

## Claims

1. A fault-tolerant control method (10) for an open-circuit fault in an alternating current motor and an inverter thereof, the method (10) comprising the following steps:
A: determining, based on fault information of the alternating current motor and the inverter for driving the alternating current motor, an open-circuit fault position interval corresponding to each fault phase in one or more fault phases, the open-circuit fault position interval refers to a rotor electrical angle range within which the fault phase in the corresponding fault state cannot operate normally;
B: establishing a fault-tolerant control constraint model, wherein the fault-tolerant control constraint model comprises an open-circuit fault equation applicable to each fault phase for the corresponding open-circuit fault position interval;
C: determining, with the fault-tolerant control constraint model as a constraint, a phase current reference value by using a fault-tolerant control algorithm; and
**characterized in that**, the step of determining an open-circuit fault position interval corresponding to each fault phase in one or more fault phases, comprises:
determining a corresponding fault state for each of said fault phases based on at least one of the following fault information: whether various phase windings of the alternating current motor are able to be connected to a positive pole and a negative pole of a power supply through the inverter; the positions of power devices in the inverter in which the open-circuit fault occurs;
determining an open-circuit fault position interval corresponding to the fault state.

2. The method (10) according to claim 1, wherein the step of determining a corresponding fault state for each of said fault phases based on whether various phase windings of the alternating current motor are able to be connected to a positive pole and a negative pole of a power supply through the inverter, comprises:,
if the fault information indicates that a winding in a fault phase is unable to be connected to the positive pole or the negative pole of the power supply when a current of the fault phase should be positive, and that the winding in the fault phase is able to be connected to the positive pole and the negative pole of the power supply when the current of the fault phase should be negative, it is determined that the fault phase is in the first fault state;
if the fault information indicates that the winding in the fault phase is unable to be connected to the positive pole or the negative pole of the power supply when the current of the fault phase should be negative, and that the winding in the fault phase is able to be connected to the positive pole and the negative pole of the power supply when the current of the fault phase should be positive, it is determined that the fault phase is in the second fault state; and
if the fault information indicates that the winding in the fault phase is unable to be connected to the positive pole and the negative pole of the power supply throughout an electrical cycle, it is determined that the fault phase is in the third fault state.

3. The method (10) according to claim 1, wherein the step of determining the corresponding fault state for each fault phase based on positions of power devices in the inverter in which the open-circuit fault occurs, comprises:
if the fault information indicates that a power device in the inverter in which the open-circuit fault occurs is one or more of an upper bridge arm switching tube and a lower bridge arm diode in a fault phase, it is determined that the fault phase is in the first fault state;
if the fault information indicates that a power device in the inverter in which the open-circuit fault occurs is one or more of a lower bridge arm switching tube and an upper bridge arm diode in the fault phase, it is determined that the fault phase is in the second fault state; and
if the fault information indicates that power devices in the inverter in which the open-circuit fault occurs satisfy one of the following conditions, it is determined that the fault phase is in the third fault state:
the open-circuit fault occurring in both the upper bridge arm switching tube and the lower bridge arm switching tube in the fault phase;
the open-circuit fault occurring in both the upper bridge arm diode and the lower bridge arm diode in the fault phase;
the open-circuit fault occurring in both the upper bridge arm switching tube and the upper bridge arm diode in the fault phase;
the open-circuit fault occurring in both the lower bridge arm switching tube and the lower bridge arm diode in the fault phase; and
a total number of switching tubes and diodes with the open-circuit fault in the fault phase being more than two.

4. The method (10) according to claim 1, wherein the step of determining an open-circuit fault position interval corresponding to the fault state, comprises:
determining the open-circuit fault position interval corresponding to the first fault state as [*π* + Δ*θₓ*, 2*π* + Δ*θₓ*], determining the open-circuit fault position interval corresponding to the second fault state as [0 + Δ*θ*ₓ*, π* + Δ*θₓ*], and determining the open-circuit fault position interval corresponding to the third fault state as [0, 2*π*], wherein $Δ {θ}_{x} = \frac{2 π}{M} \left(x-1\right)$
wherein M denotes a number of phases of the alternating current motor, x denotes a phase sequence of the fault phase, and x ≤ *M.*

5. The method (10) according to claim 4, wherein in step B, the open-circuit fault equation for an *x*^{th} phase is able to be expressed as:
*Fₓ*(θ - Δ*θₓ*) = 0*, θ* ∈ an open-circuit fault position interval corresponding to a fault state for the *x^{th}* phase,
wherein *Fₓ* denotes a fault phase current equation, and *θ* denotes electrical angle of a motor rotor.

6. The method (10) according to claim 1, wherein the step of determining, with the fault-tolerant control constraint model as a constraint, a phase current reference value by using a fault-tolerant control algorithm, comprises:
constructing a fault-tolerant control optimization model, wherein the fault-tolerant control optimization model comprises a cost equation generated based on a motor torque equation, and constraints composed of one or more of the fault-tolerant control constraint model, a motor phase current limit equation, and a motor phase voltage limit equation; and
determining the phase current reference value by using the fault-tolerant control optimization model, wherein the phase current reference value is a function of the motor rotor electrical angle.

7. The method (10) according to claim 6, wherein if the alternating current motor is a permanent magnet synchronous motor and the inverter is a three-phase full bridge inverter, the cost equation is: $J = {\left({T}_{ref}-\frac{3}{2}{N}_{p}{i}_{q}\left[{λ}_{m}+{i}_{d}\left({L}_{d}-{L}_{q}\right)\right]\right)}^{2}$ wherein *T_{ref}* denotes a torque reference value, *Nₚ* denotes a number of pole pairs of the motor, *i_{d}* denotes a direct-axis current, *i_{q}* denotes a quadrature-axis current, *λₘ* denotes a flux linkage of a permanent magnet, *L_{d}* denotes a direct-axis inductance, and *L_{q}* denotes a quadrature-axis inductance.

8. A fault-tolerant control apparatus (30) for an open-circuit fault in an alternating current motor and an inverter thereof, the fault-tolerant control apparatus comprising:
a fault determination module (310) configured to determine, based on fault information of the alternating current motor and the inverter for driving the alternating current motor, an open-circuit fault position interval corresponding to each fault phase in one or more fault phases, the open-circuit fault position interval refers to a rotor electrical angle range within which the fault phase in the corresponding fault state cannot operate normally;
a model establishment module (320) configured to establish a fault-tolerant control constraint model, wherein the fault-tolerant control constraint model comprises an open-circuit fault equation applicable to each fault phase for the corresponding open-circuit fault position interval; and
a current determination module (330) configured to determine, with the fault-tolerant control constraint model as a constraint, a phase current reference value by using a fault-tolerant control algorithm;
wherein, the fault determination module (310) configured to determine an open-circuit fault position interval corresponding to each fault phase in one or more fault phases, comprises:
the fault determination module (310) configured to determine a corresponding fault state for each of said fault phases based on at least one of the following fault information: whether various phase windings of the alternating current motor are able to be connected to a positive pole and a negative pole of a power supply through the inverter; the positions of power devices in the inverter in which the open-circuit fault occurs; and
determine an open-circuit fault position interval corresponding to the fault state.

9. A computer storage medium, comprising instructions, wherein when the instructions are run, the method (10) according to any one of claims 1 to 7 is performed.

## Patentansprüche

1. Fehlertolerantes Steuerverfahren (10) für einen Unterbrechungsfehler in einem Wechselstrommotor und einem dazugehörigen Wechselrichter, wobei das Verfahren (10) die folgenden Schritte umfasst:
A: Bestimmen eines Unterbrechungsfehler-Positionsintervalls, das jeder Fehlerphase in einer oder mehreren Fehlerphasen entspricht, auf Grundlage von Fehlerinformationen des Wechselstrommotors und des Wechselrichters zum Antreiben des Wechselstrommotors, wobei sich das Unterbrechungsfehler-Positionsintervall auf einen elektrischen Rotorwinkelbereich bezieht, innerhalb dessen die Fehlerphase im entsprechenden Fehlerzustand nicht normal arbeiten kann;
B: Erstellen eines fehlertoleranten Steuereinschränkungsmodells, wobei das fehlertolerante Steuereinschränkungsmodell eine für jede Fehlerphase im entsprechenden Unterbrechungsfehler-Positionsintervall anwendbare Unterbrechungsfehlergleichung umfasst;
C: Bestimmen eines Phasenstrom-Referenzwerts unter Verwendung eines fehlertoleranten Steueralgorithmus mit dem fehlertoleranten Steuereinschränkungsmodell als Einschränkung; und
**dadurch gekennzeichnet, dass** der Schritt des Bestimmens eines Unterbrechungsfehler-Positionsintervalls, das jeder Fehlerphase in einer oder mehreren Fehlerphasen entspricht, umfasst:
Bestimmen eines entsprechenden Fehlerzustands für jede der Fehlerphasen auf Grundlage mindestens einer der folgenden Fehlerinformationen: ob verschiedene Phasenwicklungen des Wechselstrommotors über den Wechselrichter an einen Pluspol und einen Minuspol einer Leistungsversorgung angeschlossen werden können; die Positionen von Leistungsbauelementen im Wechselrichter, in denen der Unterbrechungsfehler auftritt;
Bestimmen eines dem Fehlerzustand entsprechenden Unterbrechungsfehler-Positionsintervalls.

2. Verfahren (10) nach Anspruch 1, wobei der Schritt des Bestimmens eines entsprechenden Fehlerzustands für jede der Fehlerphasen auf Grundlage dessen, ob verschiedene Phasenwicklungen des Wechselstrommotors über den Wechselrichter an einen Pluspol und einen Minuspol einer Leistungsversorgung angeschlossen werden können, umfasst:
wenn die Fehlerinformationen anzeigen, dass eine Wicklung in einer Fehlerphase nicht an den Pluspol oder den Minuspol der Leistungsversorgung angeschlossen werden kann, wenn ein Strom der Fehlerphase positiv sein sollte, und dass die Wicklung in der Fehlerphase an den Pluspol und den Minuspol der Leistungsversorgung angeschlossen werden kann, wenn der Strom der Fehlerphase negativ sein sollte, wird bestimmt, dass sich die Fehlerphase im ersten Fehlerzustand befindet;
wenn die Fehlerinformationen anzeigen, dass die Wicklung in der Fehlerphase nicht an den Pluspol oder den Minuspol der Leistungsversorgung angeschlossen werden kann, wenn der Strom der Fehlerphase negativ sein sollte, und dass die Wicklung in der Fehlerphase an den Pluspol und den Minuspol der Leistungsversorgung angeschlossen werden kann, wenn der Strom der Fehlerphase positiv sein sollte, wird bestimmt, dass sich die Fehlerphase im zweiten Fehlerzustand befindet; und
wenn die Fehlerinformationen anzeigen, dass die Wicklung in der Fehlerphase während eines gesamten elektrischen Zyklus weder an den Pluspol noch an den Minuspol der Leistungsversorgung angeschlossen werden kann, wird bestimmt, dass sich die Fehlerphase im dritten Fehlerzustand befindet.

3. Verfahren (10) nach Anspruch 1, wobei der Schritt des Bestimmens des entsprechenden Fehlerzustands für jede Fehlerphase auf Grundlage von Positionen von Leistungsbauelementen in dem Wechselrichter, in denen der Unterbrechungsfehler auftritt, umfasst:
wenn die Fehlerinformationen anzeigen, dass es sich bei einem Leistungsbauelement im Wechselrichter, in dem der Unterbrechungsfehler auftritt, in einer Fehlerphase um eine Schaltröhre eines oberen Brückenzweigs und/oder eine Diode eines unteren Brückenzweigs handelt, wird bestimmt, dass sich die Fehlerphase im ersten Fehlerzustand befindet;
wenn die Fehlerinformationen anzeigen, dass es sich bei einem Leistungsbauelement im Wechselrichter, in dem der Unterbrechungsfehler auftritt, in der Fehlerphase um eine Schaltröhre des unteren Brückenzweigs und/oder eine Diode des oberen Brückenzweigs handelt, wird bestimmt, dass sich die Fehlerphase im zweiten Fehlerzustand befindet; und
wenn die Fehlerinformationen anzeigen, dass Leistungsbauelemente im Wechselrichter, in denen der Unterbrechungsfehler auftritt, eine der folgenden Bedingungen erfüllen, wird bestimmt, dass sich die Fehlerphase im dritten Fehlerzustand befindet:
der Unterbrechungsfehler tritt in der Fehlerphase sowohl in der Schaltröhre des oberen Brückenzweigs als auch in der Schaltröhre des unteren Brückenzweigs auf;
der Unterbrechungsfehler tritt in der Fehlerphase sowohl in der Diode des oberen Brückenzweigs als auch in der Diode des unteren Brückenzweigs auf;
der Unterbrechungsfehler tritt in der Fehlerphase sowohl in der Schaltröhre des oberen Brückenzweigs als auch in der Diode des oberen Brückenzweigs auf;
der Unterbrechungsfehler tritt in der Fehlerphase sowohl in der Schaltröhre des unteren Brückenzweigs als auch in der Diode des unteren Brückenzweigs auf; und
die Gesamtanzahl der Schaltröhren und Dioden mit dem Unterbrechungsfehler in der Fehlerphase beträgt mehr als zwei.

4. Verfahren (10) nach Anspruch 1, wobei der Schritt des Bestimmens eines dem Fehlerzustand entsprechenden Unterbrechungsfehler-Positionsintervalls umfasst:
Bestimmen des dem ersten Fehlerzustand entsprechenden Unterbrechungsfehler-Positionsintervalls als [n + Δθₓ, 2π + Δθₓ], Bestimmen des dem zweiten Fehlerzustand entsprechenden Unterbrechungsfehler-Positionsintervalls als [0 + Δθₓ, π + Δθₓ] und Bestimmen des dem dritten Fehlerzustand entsprechenden Unterbrechungsfehler-Positionsintervalls als [0, 2π], wobei $Δ {θ}_{x} = \frac{2 π}{M} \left(x-1\right)$
wobei M eine Anzahl von Phasen des Wechselstrommotors bezeichnet, x eine Phasenfolge der Fehlerphase bezeichnet und x ≤ M gilt.

5. Verfahren (10) nach Anspruch 4, wobei in Schritt B die Unterbrechungsfehlergleichung für eine x-te Phase wie folgt ausgedrückt werden kann:
Fₓ(θ - Δθₓ) = 0, wobei θ ∈ eines Unterbrechungsfehler-Positionsintervall ist, das einem Fehlerzustand für die x-te Phase entspricht,
wobei Fx eine Fehlerphasenstromgleichung bezeichnet und θ den elektrischen Winkel eines Motorrotors bezeichnet.

6. Verfahren (10) nach Anspruch 1, wobei der Schritt des Bestimmens eines Phasenstrom-Referenzwerts unter Verwendung eines fehlertoleranten Steueralgorithmus mit dem fehlertoleranten Steuereinschränkungsmodell als Einschränkung Folgendes umfasst:
Erstellen eines fehlertoleranten Steueroptimierungsmodells, wobei das fehlertolerante Steueroptimierungsmodell eine auf Grundlage einer Motordrehmomentgleichung erzeugte Kostengleichung sowie Einschränkungen umfasst, die sich aus dem fehlertoleranten Steuereinschränkungsmodell und/oder einer Motorphasenstrom-Grenzgleichung und/oder einer Motorphasenspannungs-Grenzgleichung zusammensetzen; und
Bestimmen des Phasenstrom-Referenzwerts unter Verwendung des fehlertoleranten Steueroptimierungsmodells, wobei der Phasenstrom-Referenzwert eine Funktion des elektrischen Winkels des Motorrotors ist.

7. Verfahren (10) nach Anspruch 6, wobei, wenn es sich bei dem Wechselstrommotor um einen Permanentmagnet-Synchronmotor und bei dem Wechselrichter um einen dreiphasigen Vollbrücken-Wechselrichter handelt, die Kostengleichung wie folgt lautet: $J = {\left({T}_{ref}-\frac{3}{2}{N}_{p}{i}_{q}\left[{λ}_{m}+{i}_{d}\left({L}_{d}-{L}_{q}\right)\right]\right)}^{2}$ wobei T_{ref} einen Drehmoment-Sollwert, Nₚ eine Anzahl von Polpaaren des Motors, i_{d} einen Direktachsenstrom, i_{q} einen Quadraturachsenstrom, λₘ eine Flussbindung eines Permanentmagneten, L_{d} eine Direktachseninduktivität und L_{q} eine Quadraturachseninduktivität bezeichnet.

8. Fehlertolerante Steuereinrichtung (30) für einen Unterbrechungsfehler in einem Wechselstrommotor und einem dazugehörigen Wechselrichter, wobei die fehlertolerante Steuereinrichtung umfasst:
ein Fehlerbestimmungsmodul (310), das so konfiguriert ist, dass es auf Grundlage von Fehlerinformationen des Wechselstrommotors und des Wechselrichters zum Antreiben des Wechselstrommotors ein Unterbrechungsfehler-Positionsintervall bestimmt, das jeder Fehlerphase in einer oder mehreren Fehlerphasen entspricht, wobei sich das Unterbrechungsfehler-Positionsintervall auf einen elektrischen Rotorwinkelbereich bezieht, innerhalb dessen die Fehlerphase im entsprechenden Fehlerzustand nicht normal betrieben werden kann;
ein Modellerstellungsmodul (320), das so konfiguriert ist, dass es ein fehlertolerantes Steuereinschränkungsmodell erstellt, wobei das fehlertolerante Steuereinschränkungsmodell eine für jede Fehlerphase im entsprechenden Unterbrechungsfehler-Positionsintervall anwendbare Unterbrechungsfehlergleichung umfasst; und
ein Strombestimmungsmodul (330), das so konfiguriert ist, dass es mit dem fehlertoleranten Steuereinschränkungsmodell als Einschränkung einen Phasenstrom-Referenzwert unter Verwendung eines fehlertoleranten Steueralgorithmus bestimmt;
wobei das Fehlerbestimmungsmodul (310), das so konfiguriert ist, dass es für jede Fehlerphase in einer oder mehreren Fehlerphasen ein Unterbrechungsfehler-Positionsintervall bestimmt, umfasst:
das Fehlerbestimmungsmodul (310), das so konfiguriert ist, dass es für jede der Fehlerphasen einen entsprechenden Fehlerzustand auf Grundlage mindestens einer der folgenden Fehlerinformationen bestimmt: ob verschiedene Phasenwicklungen des Wechselstrommotors über den Wechselrichter an einen Pluspol und einen Minuspol einer Leistungsversorgung angeschlossen werden können; die Positionen von Leistungsbauelementen im Wechselrichter, an denen der Unterbrechungsfehler auftritt; und
ein dem Fehlerzustand entsprechendes Unterbrechungsfehler-Positionsintervall bestimmt.

9. Computerspeichermedium, das Anweisungen umfasst, wobei bei Ausführung der Anweisungen das Verfahren (10) nach einem der Ansprüche 1 bis 7 durchgeführt wird.

## Revendications

1. Procédé de commande tolérant aux défauts (10) pour un défaut en circuit ouvert d'un moteur à courant alternatif et un onduleur de celui-ci, le procédé (10) comprenant les étapes suivantes :
A : déterminer, sur la base d'informations de défaut du moteur à courant alternatif et de l'onduleur pour attaquer le moteur à courant alternatif, un intervalle de position de défaut en circuit ouvert correspondant à chaque phase défectueuse dans une ou plusieurs phases défectueuses, l'intervalle de position de défaut en circuit ouvert se réfère à une plage angulaire électrique rotorique dans laquelle la phase défectueuse dans l'état de défaut correspondant ne peut pas fonctionner normalement ;
B : établir un modèle de contrainte de commande tolérant aux défauts, le modèle de contrainte de commande tolérant aux défauts comprenant une équation de défaut en circuit ouvert applicable à chaque phase défectueuse pour l'intervalle de position de défaut en circuit ouvert correspondant ;
C : déterminer, avec comme contrainte le modèle de contrainte de commande tolérant aux défauts, une valeur de référence de courant de phase en utilisant un algorithme de commande tolérant aux défauts ; et
**caractérisé en ce que** l'étape de détermination d'un intervalle de position de défaut en circuit ouvert correspondant à chaque phase défectueuse dans une ou plusieurs phases défectueuses comprend :
la détermination d'un état de défaut correspondant pour chacune desdites phases défectueuses sur la base d'au moins une des informations de défaut suivantes : si différents enroulements de phase du moteur à courant alternatif peuvent être connectés ou non à un pôle positif et un pôle négatif d'une alimentation au travers de l'onduleur ; les positions de dispositifs d'alimentation dans l'onduleur dans lesquelles se produit le défaut en circuit ouvert ;
la détermination d'un intervalle de position de défaut en circuit ouvert correspondant à l'état de défaut.

2. Procédé (10) selon la revendication 1, dans lequel l'étape de détermination d'un état de défaut correspondant pour chacune desdites phases défectueuses, sur la base de si différents enroulements de phase du moteur à courant alternatif peuvent être connectés ou non à un pôle positif et à un pôle négatif d'une alimentation au travers de l'onduleur, comprend :
si l'information de défaut indique qu'un enroulement en phase défectueuse ne peut pas être connecté au pôle positif ou au pôle négatif de l'alimentation lorsqu'un courant de la phase défectueuse doit être positif, et que l'enroulement en phase défectueuse peut être connecté au pôle positif et au pôle négatif de l'alimentation lorsque le courant de la phase défectueuse doit être négatif, il est déterminé que la phase défectueuse est dans le premier état de défaut ;
si l'information de défaut indique que l'enroulement en phase défectueuse ne peut pas être connecté au pôle positif ou au pôle négatif de l'alimentation lorsque le courant de la phase défectueuse doit être négatif, et que l'enroulement en phase défectueuse peut être connecté au pôle positif et au pôle négatif de l'alimentation lorsque le courant de la phase défectueuse doit être positif, il est déterminé que la phase défectueuse est dans le deuxième état de défaut ;
si l'information de défaut indique que l'enroulement en phase défectueuse ne peut pas être connecté au pôle positif et au pôle négatif de l'alimentation tout au long d'un cycle électrique, il est déterminé que la phase défectueuse est dans le troisième état de défaut.

3. Procédé (10) selon la revendication 1, dans lequel l'étape de détermination de l'état de défaut correspondant pour chaque phase défectueuse sur la base de positions de dispositifs d'alimentation dans l'onduleur dans lesquelles se produit le défaut en circuit ouvert comprend :
si les informations de défaut indiquent qu'un dispositif d'alimentation dans l'onduleur dans lequel se produit le défaut en circuit ouvert est un ou plusieurs parmi un tube de commutation de bras de pont supérieur et une diode de bras de pont inférieur dans une phase défectueuse, il est déterminé que la phase défectueuse est dans le premier état de défaut ;
si les informations de défaut indiquent qu'un dispositif d'alimentation dans l'onduleur dans lequel se produit le défaut en circuit ouvert est un ou plusieurs parmi un tube de commutation de bras de pont inférieur et une diode de bras de pont supérieur dans la phase défectueuse, il est déterminé que la phase défectueuse est dans le deuxième état de défaut ; et
si les informations de défaut indiquent que des dispositifs d'alimentation dans l'onduleur dans lesquels se produit le défaut en circuit ouvert satisfont à l'une des conditions suivantes, il est déterminé que la phase défectueuse est dans le troisième état de défaut :
le défaut en circuit ouvert se produisant à la fois dans le tube de commutation de bras de pont supérieur et le tube de commutation de bras de pont inférieur dans la phase défectueuse ;
le défaut en circuit ouvert se produisant à la fois dans la diode de bras de pont supérieur et la diode de bras de pont inférieur dans la phase défectueuse ;
le défaut en circuit ouvert se produisant à la fois dans le tube de commutation de bras de pont supérieur et la diode de bras de pont supérieur dans la phase défectueuse ;
le défaut en circuit ouvert se produisant à la fois dans le tube de commutation de bras de pont inférieur et la diode de bras de pont inférieur dans la phase défectueuse ; et
un nombre total de tubes de commutation et de diodes ayant le défaut en circuit ouvert dans la phase défectueuse étant supérieur à deux.

4. Procédé (10) selon la revendication 1, dans lequel l'étape de détermination d'un intervalle de position de défaut en circuit ouvert correspondant à l'état de défaut comprend :
la détermination de l'intervalle de position de défaut en circuit ouvert correspondant au premier état de défaut en tant que [π + Δθₓ, 2π + Δθₓ], la détermination de l'intervalle de position de défaut en circuit ouvert correspondant au deuxième état de défaut en tant que [0 + Δθₓ, π + Δθₓ], et la détermination de l'intervalle de position de défaut en circuit ouvert correspondant au troisième état de défaut en tant que [0, 2π], dans lequel $Δ {θ}_{x} = \frac{2 π}{M} \left(x-1\right)$
dans laquelle M désigne un nombre de phases du moteur à courant alternatif, x désigne une séquence de phase de la phase défectueuse, et x ≤ M.

5. Procédé (10) selon la revendication 4, dans lequel, à l'étape B, l'équation de défaut en circuit ouvert pour une x^{ième} phase peut s'exprimer par :
Fₓ(θ - Δθₓ) = 0, θ ∈ un intervalle de position de défaut en circuit ouvert correspondant à un état de défaut pour la x^{ième} phase,
dans laquelle Fₓ désigne une équation de courant à phase défectueuse, et θ désigne un angle électrique d'un rotor de moteur.

6. Procédé (10) selon la revendication 1, dans lequel l'étape de détermination, avec comme contrainte le modèle de contrainte de commande tolérant aux défauts, d'une valeur de référence de courant de phase en utilisant un algorithme de commande tolérant aux défauts, comprend :
la construction d'un modèle d'optimisation de commande tolérant aux défauts, dans lequel le modèle d'optimisation de commande tolérant aux défauts comprend une équation de coût générée sur la base d'une équation de couple moteur, et des contraintes composées d'un ou de plusieurs parmi un modèle de contrainte de commande tolérant aux défauts, une équation de limite de courant de phase moteur et une équation de limite de tension de phase moteur ; et
la détermination de la valeur de référence de courant de phase à l'aide du modèle d'optimisation de commande tolérant aux défauts, la valeur de référence de courant de phase étant fonction de l'angle électrique de rotor de moteur.

7. Procédé (10) selon la revendication 6, dans lequel si le moteur à courant alternatif est un moteur synchrone à aimants permanents et que l'onduleur est un onduleur à pont complet triphasé, l'équation de coût est : $J = {\left({T}_{ref}-\frac{3}{2}{N}_{p}{i}_{q}\left[{λ}_{m}+{i}_{d}\left({L}_{d}-{L}_{q}\right)\right]\right)}^{2}$ dans laquelle T_{ref} désigne une valeur de référence de couple, Nₚ désigne un nombre de paires de pôles du moteur, i_{d} désigne un courant d'axe direct, i_{q} désigne un courant d'axe en quadrature, λₘ désigne un couplage par flux d'un aimant permanent, L_{d} désigne une inductance d'axe direct et L_{q} désigne une inductance d'axe en quadrature.

8. Appareil de commande tolérant aux défauts (30) pour un défaut en circuit ouvert d'un moteur à courant alternatif et d'un onduleur de celui-ci, l'appareil de commande tolérant aux défauts comprenant :
un module de détermination de défaut (310) configuré pour déterminer, sur la base d'informations de défaut du moteur à courant alternatif et de l'onduleur pour attaquer le moteur à courant alternatif, un intervalle de position de défaut en circuit ouvert correspondant à chaque phase défectueuse dans une ou plusieurs phases défectueuses, l'intervalle de position de défaut en circuit ouvert se réfère à une plage angulaire électrique rotorique dans laquelle la phase défectueuse dans l'état de défaut correspondant ne peut pas fonctionner normalement ;
un module d'établissement de modèle (320) configuré pour établir un modèle de contrainte de commande insensible aux défauts, le modèle de contrainte de commande insensible aux défauts comprenant une équation de défaut en circuit ouvert applicable à chaque phase défectueuse pour l'intervalle de position de défaut en circuit ouvert correspondant ; et
un module de détermination de courant (330) configuré pour déterminer, avec comme contrainte le modèle de contrainte de commande tolérant aux défauts, une valeur de référence de courant de phase en utilisant un algorithme de commande tolérant aux défauts ;
dans lequel, le module de détermination de défaut (310) configuré pour déterminer un intervalle de position de défaut en circuit ouvert correspondant à chaque phase défectueuse dans une ou plusieurs phases défectueuses comprend :
le module de détermination de défaut (310) configuré pour déterminer un état de défaut correspondant pour chacune desdites phases défectueuses sur la base d'au moins une des informations de défaut suivantes : si différents enroulements de phase du moteur à courant alternatif peuvent être connectés ou non à un pôle positif et un pôle négatif d'une alimentation au travers de l'onduleur ; les positions de dispositifs d'alimentation dans l'onduleur dans lesquelles se produit le défaut en circuit ouvert ; et
la détermination d'un intervalle de position de défaut en circuit ouvert correspondant à l'état de défaut.

9. Support de stockage informatique, comprenant des instructions, dans lequel, lorsque les instructions sont exécutées, le procédé (10) selon l'une quelconque des revendications 1 à 7 est exécuté.
